# EUROPEAN PATENT SPECIFICATION

(11) **EP 3 233 683 B1**
(45) Date of publication and mention of the grant of the patent: **10.10.2018**
(21) Application number: 15813472.6
(22) Date of filing: 09.12.2015
(51) Int. Cl.: B65H 49/32, B23K 9/133

(54) **WIRE FEEDER FOR A WELDING ARRANGEMENT**
DRAHTZUFUHR FÜR EINE SCHWEISSANORDNUNG
DÉVIDOIR DE FIL POUR UN ARRANGEMENT DE SOUDAGE

(30) Priority: 16.12.2014 FI 20146100
(43) Date of publication of application: 25.10.2017
(73) Proprietor: Kemppi Oy, 15801 Lahti (FI)
(72) Inventor: KUUTTI, Simo, 15320 Lahti (FI); TANSKANEN, Jani, 15210 Lahti (FI); HUOTARI, Juho, 15900 Lahti (FI)
(74) Representative: Boco IP Oy Ab
(86) International application number: PCT/FI2015/050866
(87) International publication number: WO 2016/097475

(56) References cited:
- EP-A1- 0 803 310
- JP-A- 2002 283 054
- JP-U- S57 170 880
- US-A- 5 692 700

## Description

### FIELD OF THE INVENTION

The present invention relates to a wire feeder for a welding arrangement.

### BACKGROUND OF THE INVENTION

Traditional open wire feeder for a welding arrangement comprises a frame, a first support and a second support connected to the frame. The first and the second support are adapted to support a shaft acting as a wire reel hub. The traditional wire feeder also comprises a belt running longitudinally over a wire reel set in the wire reel hub. The belt acts as a retainer for retaining the wire reel at the wire feeder. The belt also provides friction for braking the wire reel. A problem with the traditional open wire feeder is that the wire feeder must be set on a level surface and therefore it cannot be used in inclined positions, which is often required for using the wire feeder with an overhead wire feeder boom.

Another problem with the traditional open wire feeder is that due to high voltage in the welding wire and rotating wire reel the traditional open wire feeder causes a safety hazard.

JP S57 170880 U discloses a wire feeder according to the preamble of independent claim 1.

### BRIEF DESCRIPTION OF THE INVENTION

An object of the present invention is to provide a wire feeder so as to overcome the above problems.

The object of the invention is achieved by a wire feeder which is characterized by what is stated in the independent claim 1. The preferred embodiments of the invention are disclosed in the dependent claims.

The invention is based on the idea of providing a wire feeder for a welding arrangement comprising a frame, a first support and a second support connected to the frame for receiving a wire reel hub and for supporting the wire reel hub equipped with a wire reel, the wire reel hub having a first end and a second end, a wire reel hub locking means for limiting displacement of the wire reel hub received in the first support and the second support while allowing rotation of the wire reel hub, and a cover connected to the frame for covering the wire reel, wherein the first support is adapted to support the first end of the wire reel hub and the second support is adapted to support the second end of the wire reel hub, and the first support and the second support are adapted to allow rotation of the wire reel hub received in the first support and the second support about a rotational axis.

An advantage of the wire feeder of the invention is that the wire feeder can be set in an inclined position without the wire reel falling down from the wire feeder. The wire feeder of the invention protects the user of the wire feeder from the high voltage of the welding wire and the rotating wire reel. The wire feeder also protects the wire reel from dust and dirt.

### BRIEF DESCRIPTION OF THE DRAWINGS

In the following the invention will be described in greater detail by means of preferred embodiments with reference to the accompanying drawings, in which
Figure 1 is a schematic drawing of an embodiment according to the invention;
Figure 2 is a schematic drawing of an embodiment according to the invention;
Figure 3 is a schematic drawing of an embodiment according to the invention;
Figure 4 is a schematic drawing of an embodiment according to the invention;
Figure 5 is a schematic drawing of an embodiment according to the invention;
Figure 6 is a schematic drawing of an embodiment according to the invention;
Figure 7 is a schematic drawing of an embodiment according to the invention;
Figure 8 is a schematic drawing of an embodiment according to the invention;
Figure 9 is a schematic drawing of a wire reel hub; and
Figure 10 is a schematic drawing of a wire reel hub.

### DETAILED DESCRIPTION OF THE INVENTION

The invention relates to a wire feeder for a welding arrangement comprising
a frame 10,
a first support 11 and a second support 12 connected to the frame 10 for receiving a wire reel hub 20 and for supporting the wire reel hub 20 equipped with a wire reel 23, the wire reel hub 20 having a first end 21 and a second end 22,
a wire reel hub locking means 30 for limiting displacement of the wire reel hub 20 received in the first support 11 and the second support 12 while allowing rotation of the wire reel hub 20, and
a cover 40 connected to the frame 10 for covering the wire reel 23, wherein
the first support 11 is adapted to support the first end 21 of the wire reel hub 20 and the second support 12 is adapted to support the second end 22 of the wire reel hub 20, and
the first support 11 and the second support 12 are adapted to allow rotation of the wire reel hub 20 received in the first support 11 and the second support 12 about a rotational axis 13.

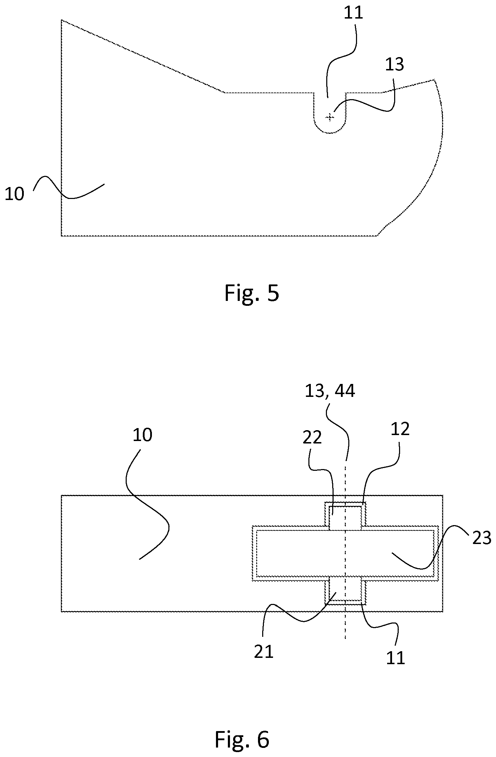

Figure 5 illustrates an embodiment of a side view of the frame 10. Figure 6 illustrates a top view of an embodiment of the wire feeder where the cover 40 is not visible and where a wire reel hub 20 equipped with a wire reel 23 is received in the first support 11 and the second support 12.

According to an embodiment the wire feeder comprises wire driving means arranged to the frame for driving the wire from the wire feeder to the welding nozzle.

According to an embodiment the first support 11 and the second support 12 have at least partly semicircular shape. According to an embodiment the rotational axis 13 is a line defined by the centers of the semicircular parts of the first support 11 and the second support 12.

According to an embodiment the frame 10 comprises a first slot acting as the first support 11 and a second slot acting as the second support 12. According to an embodiment the first slot and the second slot extend vertically when the wire feeder is set on a horizontal surface.

According to an embodiment the wire feeder is openable. Opening is required for accessing the wire reel and for replacing the wire reel. The wire feeder is opened when the cover 40 is set to an open position. The wire feeder is closed when the cover 40 is set to a closed position. The wire feeder is set to the open position when at least part of the cover 40 is moved in such a position where is allows accessing and replacing the wire reel 23 and/or the wire reel hub 20. The wire feeder is set to the closed position when at least part of the cover 40 is moved in such a position where it covers the wire reel and/or the wire reel hub 20.

According to the invention at least part of the cover 40 is movably connected to the frame 10 so that said at least a part of the cover 40 movable in relation to the frame 10. According to an embodiment the wire feeder is openable by moving at least part of the cover 40 in relation to the frame 10. According to an embodiment at least a part of the cover 40 is movably connected to the frame 10 so that said at least a part of the cover 40 is rotatable in relation to the frame 10. According to an embodiment the wire feeder is openable by rotating at least part of the cover 40 in relation to the frame 10.

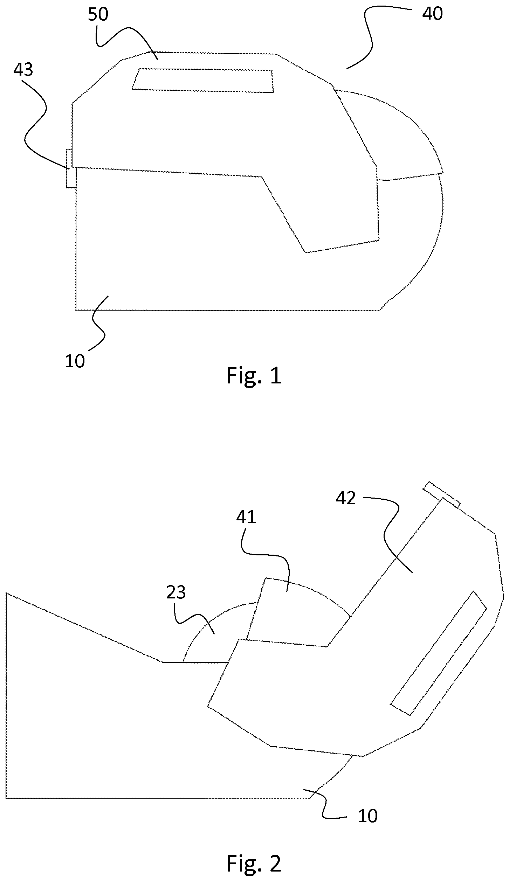

Figure 1 illustrates an embodiment of the invention where the wire feeder is closed.

According to an embodiment said at least a part of the cover 40 is rotatable about a cover axis 44 which is coaxial with the rotational axis 13. According to an embodiment the cover axis 44 is concentric with the rotational axis 13. According to an embodiment the cover axis 44 is at a distance from the rotational axis 13. According to an embodiment the distance between the cover axis 44 and the rotational axis 13 is less than 5 cm, preferably less than 3 cm. According to an embodiment the cover axis 44 and the rotational axis 13 are aligned vertically, when the wire feeder is set on a horizontal surface.

According to the invention the cover 40 comprises a first part 41 and a second part 42 arranged at least partly on top of the first part 41, wherein the first part 41 is at least partly covered by the second part 42, the first part 41 of the cover 40 is movable between an open position, where the wire reel 23 is at least partly uncovered by the first part 41, and a closed position, where the wire reel 23 is covered by the first part 41, and the second part 42 of the cover 40 is movable between an open position, where the first part 41 is at least partly uncovered by the second part 42, and a closed position, where the first part 41 is covered by the second part 42.

According to an embodiment the first part 41 of the cover 40 is arranged to move to the closed position when the second part 42 of the cover 40 is moved from the open position to the closed position, and the first part 41 of the cover 40 is arranged to stay in the closed position when the second of the cover 40 part is moved from the closed position to the open position. In other words, when the first part 41 is set to the open position, the cover 40 is set to the open position, and when the second part 42 is set to the closed position, the cover 40 is set to the closed position.

Figure 2 illustrates an embodiment of the invention where the second part 42 of the cover 40 is in the open position and the first part 41 of the cover is in the closed position.

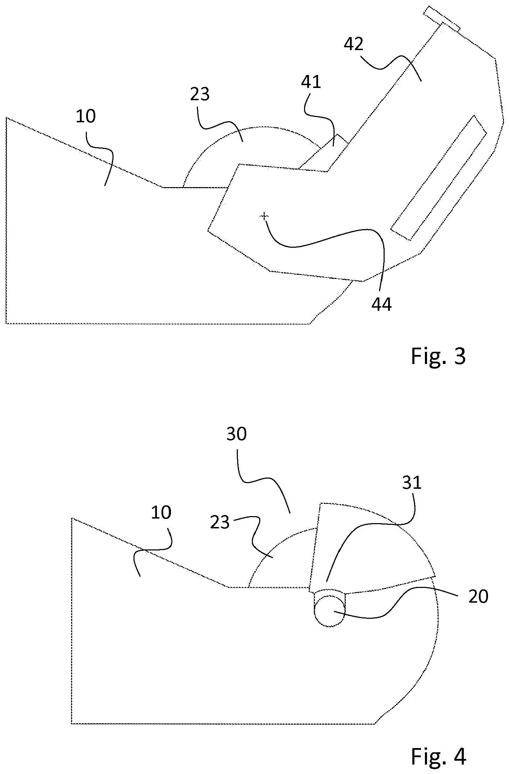

Figure 3 illustrates an embodiment of the invention where the second part 42 of the cover 40 is in the open position and the first part 41 of the cover 40 is in the open position.

According to the invention the wire reel hub locking means 30 is adapted to limit displacement of the wire reel hub 20 when the wire feeder is closed. According to an embodiment the wire reel hub locking means 30 is adapted to limit displacement of the wire reel hub 20 when at least part of the cover 40 is in the closed position.

According to an embodiment the wire reel hub locking means 30 is adapted to limit displacement of the wire reel hub 20 when the first part 41 of the cover 40 is in the closed position. In other words the wire reel hub locking means 30 is adapted to release the wire reel hub 20 when the first part 41 of the cover 40 is moved to the open position. According to the invention the wire reel hub locking means 30 comprise a retaining means 31 connected to the first part 41 of the cover 40 for retaining the first end 21 of the wire reel hub 20 at the first support 11 and the second end 22 of the wire reel hub 20 at the second support 12. According to an embodiment the retaining means 31 form a closed circle with the first support 11 and the second support 12 around the corresponding end 21, 22 of the wire reel hub 20 when the first part 41 of the cover 40 is in the closed position.

Figure 4 illustrates an embodiment of the invention where the second part 42 of the cover 40 is not visible and the first part 41 of the cover 40 is in the closed position and the wire reel hub locking means 30 is engaged.

According to an embodiment the cover 40 comprises a cover locking means 43 for preventing opening of the wire feeder. According to an embodiment the cover locking means 43 limit movement of the cover 40 in relation to the frame 10. According to an embodiment the cover locking means 43 is arranged in the second part 42 of the cover 40.

According to an embodiment the cover 40 comprises a handle 50 for carrying the wire feeder.

According to an embodiment the wire feeder comprises attaching means for attaching the wire feeder to a wire feeder boom 70. According to an embodiment the attaching means are arranged to the cover 40. According to an embodiment the attaching means are arranged to the handle 50.

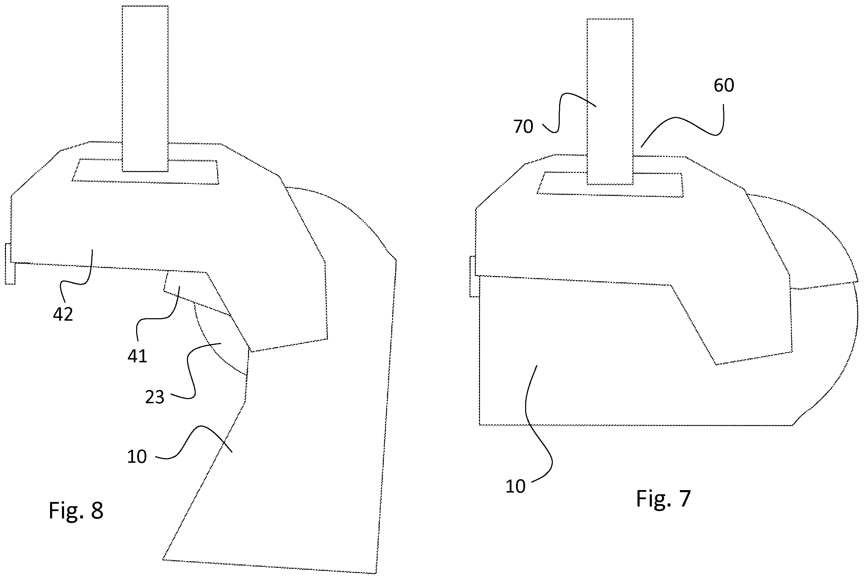

Figure 7 illustrates an embodiment of the invention where the wire feeder is attached to a wire feeder boom 70 and the wire feeder is closed. Figure 8 illustrates an embodiment of the invention where the wire feeder is attached to a wire feeder boom 70, the second part 42 of the cover 40 is in the open position, and the first part 41 of the cover 40 is in the closed position.

The wire feeder according to an embodiment allows easy and safe accessing and replacing of the wire reel, when the wire feeder is attached to an overhead wire feeder boom 70. When the cover locking means 43 are released, the wire feeder can be opened by rotating the frame 10 in relation to the second 42 part of the cover 40, which is attached to the wire feeder boom 70. While the second part 42 of the cover 40 is set to the open position, the first part 41 of the cover 40 stays in the closed position preventing falling down of the wire reel 23. When the person operating the wire feeder is ready, the person can open the first part 41 of the cover 40 and release the wire reel hub 20 from the wire reel hub locking means 30 for replacing the wire reel 23.

According to an embodiment the wire feeder comprises a spring means connected to the frame 10 and the deck 40 for inhibiting opening of the wire feeder. The spring means help closing the wire feeder when it is attached to the wire feeder boom 70. The spring means may also cause the retaining means 31 to exert pressure to the wire reel hub 20 for increasing the friction between the ends 21, 22 of the wire reel hub 20 and the supports 11, 12. Increase in friction is required when the weight of the wire reel hub 20 equipped with a wire reel 23 is not sufficient for creating sufficient friction.

According to an embodiment the first support 11 and the second support 12 are adapted to support a wire reel hub 20 having a diameter of at least part of the first end 21 of the wire reel hub 20 and at least part of the second end 22 of the wire reel hub 20 of at least 100 mm, preferably between 100 to 200 mm. According to an embodiment the radius of at least partly semicircular shape of the first support 11 and the second support 12 is at least 100 mm, preferably between 100 to 200 mm. According to an embodiment the semicircular part of the first support 11 and the second support 12 spans approximately 180 degrees.

In other words, in this embodiment, the wire reel hub 20 is supported by the first support 11 and the second support 12 by the larger diameter sections of the first end 21 and the second end 22 of the wire reel hub 20.

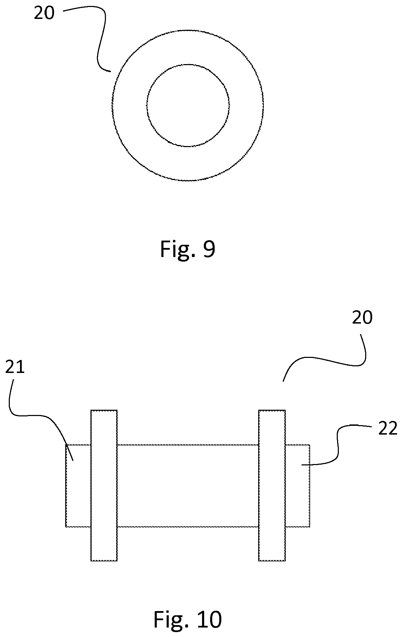

According to an embodiment the wire reel hub 20 is adapted to receive the wire reel 23 between the first end 21 of the wire reel hub 20 and the second end 22 of the wire reel hub 20. The diameter of the wire reel hub 20 between the first end 21 of the wire reel hub 20 and the second end 22 of the wire reel hub 20 is less than 50 mm. The diameter of the center hole of the wire reel is usually 50 mm. Figures 9 and 10 illustrate the wire reel hub 20.

The larger diameter parts of the wire reel hub 20 provide greater braking force to the wire reel hub 20 than using a wire reel hub 20 having a smaller diameter in the points of support. Because of greater braking force, the weight of the wire reel is sufficient for providing sufficient braking for the wire reel hub 20 without using a separate brake disc or a brake belt.

Due to the semicircular shape of the first support 11 and the second support 12 the braking force is also provided when the wire feeder is set in an inclined position.

## Claims

1. A wire feeder for a welding arrangement comprising
a frame (10),
a first support (11) and a second support (12) connected to the frame (10) for receiving a wire reel hub (20) and for supporting the wire reel hub (20) equipped with a wire reel (23), the wire reel hub (20) having a first end (21) and a second end (22), wherein
the first support (11) is adapted to support the first end (21) of the wire reel hub (20) and the second support (12) is adapted to support the second end (22) of the wire reel hub (20),
the first support (11) and the second support (12) are adapted to allow rotation of the wire reel hub (20) received in the first support (11) and the second support (12) about a rotational axis (13),
a wire reel hub locking means (30) for limiting displacement of the wire reel hub (20) received in the first support (11) and the second support (12) while allowing rotation of the wire reel hub (20), and
a cover (40) connected to the frame (10) for covering the wire reel (23), wherein
at least part of the cover (40) is movably connected to the frame (10) so that said at least a part of the cover (40) is rotatable in relation to the frame (10),
the wire reel hub locking means (30) is adapted to limit displacement of the wire reel hub (20) when the wire feeder is closed,
**characterized in that**
the cover (40) comprises a first part (41) and a second part (42) arranged at least partly on top of the first part (41),
the first part (41) is at least partly covered by the second part (42),
the first part (41) of the cover (40) is movable between an open position, where the wire reel (23) is at least partly uncovered by the first part (41), and a closed position, where the wire reel (23) is covered by the first part (41),
the second part (42) of the cover (40) is movable between an open position, where the first part (41) is at least partly uncovered by the second part (42), and a closed position, where the first part (41) is covered by the second part (42) and the wire reel hub locking means (30) comprise a retaining means (31) connected to the first part (41) of the cover (40) for retaining the first end (21) of the wire reel hub (20) at the first support (11) and the second end (22) of the wire reel hub (20) at the second support (12).

2. A wire feeder according to claim 1, **characterized in that** said at least a part of the cover (40) is rotatable about a cover axis (44) which is coaxial with the rotational axis (13).

3. A wire feeder according to claim 2, **characterized in that** the cover axis (44) is concentric with the rotational axis (13).

4. A wire feeder according to claim 2, **characterized in that** the cover axis (44) is at a distance from the rotational axis (13).

5. A wire feeder according to claim 4, **characterized in that** the distance between the cover axis (44) and the rotational axis (13) is less than 5 cm.

6. A wire feeder according to any one of the preceding claims, **characterized in that** the first part (41) of the cover (40) is arranged to move to the closed position when the second part (42) of the cover (40) is moved from the open position to the closed position, and
the first part (41) of the cover (40) is arranged to stay in the closed position when the second of the cover (40) part is moved from the closed position to the open position.

7. A wire feeder according to any one of the preceding claims, **characterized in that** the wire reel hub locking means (30) is adapted to limit displacement of the wire reel hub (20) when the first part (41) of the cover (40) is in the closed position.

8. A wire feeder according to any one of the preceding claims, **characterized in that** the cover (40) comprises a cover locking means (43) for preventing opening of the wire feeder.

9. A wire feeder according to claim 8, **characterized in that** the cover locking means (43) is arranged in the second part (42) of the cover (40).

10. A wire feeder according to any one of the preceding claims, **characterized in that** the cover (40) comprises a handle (50) for carrying the wire feeder.

11. A wire feeder according to any one of the preceding claims, **characterized in that** the wire feeder comprises attaching means for attaching the wire feeder to a wire feeder boom (70).

12. A wire feeder according to claim 11, **characterized in that** the attaching means are arranged to the cover (40).

13. A wire feeder according to claim 12, **characterized in that** the attaching means are arranged to the handle (50).

14. A wire feeder according to any one of the preceding claims, **characterized in that** the first support (11) and the second support (12) are adapted to support a wire reel hub (20) having a diameter of at least part of the first end (21) of the wire reel hub (20) and at least part of the second end (22) of the wire reel hub (20) of at least 100 mm, preferably between 100 to 200 mm.

## Patentansprüche

1. Drahtvorschubvorrichtung für eine Schweißanordnung, umfassend:
einen Rahmen (10),
eine erste Halterung (11) und eine zweite Halterung (12), die mit dem Rahmen (10) verbunden sind, zum Aufnehmen eines Drahtspulenwickelkerns (20) und zum Stützen des mit einer Drahtspule (23) bestückten Drahtspulenwickelkerns (20), wobei der Drahtspulenwickelkern (20) ein erstes Ende (21) und ein zweites Ende (22) aufweist, wobei
die erste Halterung (11) eingerichtet ist, um das erste Ende (21) des Drahtspulenwickelkerns (20) zu stützen, und die zweite Halterung (12) eingerichtet ist, um das zweite Ende (22) des Drahtspulenwickelkerns (20) zu stützen,
die erste Halterung (11) und die zweite Halterung (12) eingerichtet sind, um das Drehen des in der ersten Halterung (11) und der zweiten Halterung (12) aufgenommenen Drahtspulenwickelkerns (20) um eine Rotationsachse (13) zu gestatten,
ein Drahtspulenwickelkern-Verriegelungsmittel (30) zum Begrenzen der Verschiebung des in der ersten Halterung (11) und der zweiten Halterung (12) aufgenommenen Drahtspulenwickelkerns (20) bei gleichzeitiger Gestattung der Drehung des Drahtspulenwickelkerns (20), und
eine mit dem Rahmen (10) verbundene Abdeckung (40) zum Abdecken der Drahtspule (23),
wobei
mindestens ein Teil der Abdeckung (40) mit dem Rahmen (10) beweglich verbunden ist, so dass der mindestens eine Teil der Abdeckung (40) im Verhältnis zum Rahmen (10) drehbar ist,
das Drahtspulenwickelkern-Verriegelungsmittel (30) eingerichtet ist, um die Verschiebung des Drahtspulenwickelkerns (20) zu begrenzen, wenn die Drahtvorschubvorrichtung geschlossen ist,
**dadurch gekennzeichnet, dass**
die Abdeckung (40) einen ersten Teil (41) und einen mindestens teilweise oben auf dem ersten Teil (41) angeordneten zweiten Teil (42) umfasst,
der erste Teil (41) mindestens teilweise durch den zweiten Teil (42) abgedeckt wird,
der erste Teil (41) der Abdeckung (40) beweglich ist zwischen einer offenen Position, in der die Drahtspule (23) durch den ersten Teil (41) mindestens teilweise freigelegt wird, und einer geschlossenen Position, in der die Drahtspule (23) durch den ersten Teil (41) abgedeckt wird,
der zweite Teil (42) der Abdeckung (40) beweglich ist zwischen einer offenen Position, in der der erste Teil (41) durch den zweiten Teil (42) mindestens teilweise freigelegt wird, und einer geschlossenen Position, in der der erste Teil (41) durch den zweiten Teil (42) abgedeckt wird, und
das Drahtspulenwickelkern-Verriegelungsmittel (30) ein mit dem ersten Teil (41) der Abdeckung (40) verbundenes Sicherungsmittel (31) umfasst, um das erste Ende (21) des Drahtspulenwickelkerns (20) an der ersten Halterung (11) und das zweite Ende (22) des Drahtspulenwickelkerns (20) an der zweiten Halterung (12) zu sichern.

2. Drahtvorschubvorrichtung nach Anspruch 1, **dadurch gekennzeichnet, dass** der mindestens eine Teil der Abdeckung (40) um eine koaxial zur Rotationsachse (13) verlaufende Abdeckungsachse (44) drehbar ist.

3. Drahtvorschubvorrichtung nach Anspruch 2, **dadurch gekennzeichnet, dass** die Abdeckungsachse (44) konzentrisch zur Rotationsachse (13) ist.

4. Drahtvorschubvorrichtung nach Anspruch 2, **dadurch gekennzeichnet, dass** die Abdeckungsachse (44) abständig zur Rotationsachse (13) ist.

5. Drahtvorschubvorrichtung nach Anspruch 4, **dadurch gekennzeichnet, dass** der Abstand zwischen der Abdeckungsachse (44) und der Rotationsachse (13) kleiner als 5 cm ist.

6. Drahtvorschubvorrichtung nach einem der vorhergehenden Ansprüche, **dadurch gekennzeichnet, dass** der erste Teil (41) der Abdeckung (40) so angeordnet ist, dass er sich in die geschlossene Position bewegt, wenn der zweite Teil (42) der Abdeckung (40) von der offenen Position in die geschlossene Position bewegt wird, und
der erste Teil (41) der Abdeckung (40) so angeordnet ist, dass er in der geschlossenen Position verbleibt, wenn der zweite Teil der Abdeckung (40) von der geschlossenen Position in die offene Position bewegt wird.

7. Drahtvorschubvorrichtung nach einem der vorhergehenden Ansprüche, **dadurch gekennzeichnet, dass** das Drahtspulenwickelkern-Verriegelungsmittel (30) eingerichtet ist, um eine Verschiebung des Drahtspulenwickelkerns (20) zu begrenzen, wenn der erste Teil (41) der Abdeckung (40) sich in der geschlossenen Position befindet.

8. Drahtvorschubvorrichtung nach einem der vorhergehenden Ansprüche, **dadurch gekennzeichnet, dass** die Abdeckung (40) ein Abdeckungsverriegelungsmittel (43) umfasst, um ein Öffnen der Drahtvorschubvorrichtung zu verhindern.

9. Drahtvorschubvorrichtung nach Anspruch 8, **dadurch gekennzeichnet, dass** das Abdeckungsverriegelungsmittel (43) im zweiten Teil (42) der Abdeckung (40) angeordnet ist.

10. Drahtvorschubvorrichtung nach einem der vorhergehenden Ansprüche, **dadurch gekennzeichnet, dass** die Abdeckung (40) einen Griff (50) zum Tragen der Drahtvorschubvorrichtung umfasst.

11. Drahtvorschubvorrichtung nach einem der vorhergehenden Ansprüche, **dadurch gekennzeichnet, dass** die Drahtvorschubvorrichtung Befestigungsmittel zum Befestigen der Drahtvorschubvorrichtung an einem Drahtvorschubausleger (70) umfasst.

12. Drahtvorschubvorrichtung nach Anspruch 11, **dadurch gekennzeichnet, dass** die Befestigungsmittel an der Abdeckung (40) angeordnet sind.

13. Drahtvorschubvorrichtung nach Anspruch 12, **dadurch gekennzeichnet, dass** die Befestigungsmittel am Griff (50) angeordnet sind.

14. Drahtvorschubvorrichtung nach einem der vorhergehenden Ansprüche, **dadurch gekennzeichnet, dass** die erste Halterung (11) und die zweite Halterung (12) eingerichtet sind, um einen Drahtspulenwickelkern (20) zu haltern, der einen Durchmesser mindestens eines Teils des ersten Endes (21) des Drahtspulenwickelkerns (20) und mindestens eines Teils des zweiten Endes (22) des Drahtspulenwickelkerns (20) von mindestens 100 mm, vorzugsweise zwischen 100 und 200 mm, aufweist.

## Revendications

1. Dispositif d'avance du fil pour un agencement de soudage, comprenant :
un cadre (10),
un premier appui (11) et un deuxième appui (12) reliés au cadre (10) pour loger un axe de bobinage de fil (20) et pour appuyer l'axe de bobinage de fil (20) muni d'une bobine de fil (23), ledit axe de bobinage de fil (20) ayant une première extrémité (21) et une deuxième extrémité (22), dans lequel
le premier appui (11) est adapté pour appuyer la première extrémité (21) de l'axe de bobinage de fil (20), et le deuxième appui (12) est adapté pour appuyer la deuxième extrémité (22) de l'axe de bobinage de fil (20),
le premier appui (11) et le deuxième appui (12) sont adaptés pour autoriser la rotation de l'axe de bobinage de fil (20) logé dans le premier appui (11) et le deuxième appui (12) autour d'un axe de rotation (13),
un moyen de verrouillage d'axe de bobinage de fil (30) pour limiter le déplacement de l'axe de bobinage de fil (20) logé dans le premier appui (11) et le deuxième appui (12) tout en autorisant la rotation de l'axe de bobinage de fil (20),
un capot (40) relié au cadre (10) pour recouvrir la bobine de fil (23),
dans lequel
au moins une partie du capot (40) est reliée de manière mobile au cadre (10) de sorte que ladite au moins une partie du capot (40) soit rotative par rapport au cadre (10),
le moyen de verrouillage d'axe de bobinage de fil (30) est adapté pour limiter le déplacement de l'axe de bobinage de fil (20) lorsque le dispositif d'avance de fil est fermé,
**caractérisé en ce que**
le capot (40) comprend une première partie (41) et une deuxième partie (42) disposée au moins partiellement sur le dessus de la première partie (41),
la première partie (41) est au moins partiellement recouverte par la deuxième partie (42),
la première partie (41) du capot (40) est mobile entre une position ouverte, dans laquelle la bobine de fil (23) est découverte par la première partie (41) au moins partiellement, et une position fermée, dans laquelle la bobine de fil (23) est recouverte par la première partie (41),
la deuxième partie (41) du capot (40) est mobile entre une position ouverte, dans laquelle la première partie (41) est découverte par la deuxième partie (42) au moins partiellement, et une position fermée, dans laquelle la première partie (41) est recouverte par la deuxième partie (42), et
le moyen de verrouillage d'axe de bobinage de fil (30) comprend un moyen de retenue (31) relié à la première partie (41) du capot (40) pour retenir la première extrémité (21) de l'axe de bobinage de fil (20) sur le premier appui (11) et la deuxième extrémité (22) de l'axe de bobinage de fil (20) sur le deuxième appui (12).

2. Dispositif d'avance du fil selon la revendication 1, **caractérisé en ce que** ladite au moins une partie du capot (40) est rotative autour d'un axe de capot (44) qui est coaxial avec l'axe de rotation (13).

3. Dispositif d'avance du fil selon la revendication 2, **caractérisé en ce que** l'axe de capot (44) est concentrique à l'axe de rotation (13).

4. Dispositif d'avance du fil selon la revendication 2, **caractérisé en ce que** l'axe de capot (44) est situé à une distance de l'axe de rotation (13).

5. Dispositif d'avance du fil selon la revendication 4, **caractérisé en ce que** la distance entre l'axe de capot (44) et l'axe de rotation (13) est inférieure à 5 cm.

6. Dispositif d'avance du fil selon l'une des revendications précédentes, **caractérisé en ce que** la première partie (41) du capot (40) est agencée pour se mettre en position fermée lorsque la deuxième partie (42) du capot (40) est passée de la position ouverte à la position fermée, et
la première partie (41) du capot (40) est agencée pour rester en position fermée lorsque la deuxième partie du capot (40) est passée de la position fermée à la position ouverte.

7. Dispositif d'avance du fil selon l'une des revendications précédentes, **caractérisé en ce que** le moyen de verrouillage d'axe de bobinage de fil (30) est adapté pour limiter le déplacement de l'axe de bobinage de fil (20) lorsque la première partie (41) du capot (40) est en position fermée.

8. Dispositif d'avance du fil selon l'une des revendications précédentes, **caractérisé en ce que** le capot (40) comprend un moyen de verrouillage de capot (43) pour empêcher l'ouverture du dispositif d'avance du fil.

9. Dispositif d'avance du fil selon la revendication 8, **caractérisé en ce que** le moyen de verrouillage de capot (43) est disposé dans la deuxième partie (42) du capot (40).

10. Dispositif d'avance du fil selon l'une des revendications précédentes, **caractérisé en ce que** le capot (40) comprend une poignée (50) pour porter le dispositif d'avance du fil.

11. Dispositif d'avance du fil selon l'une des revendications précédentes, **caractérisé en ce que** le dispositif d'avance du fil comprend des moyens d'attache pour attacher le dispositif d'avance du fil à un bras d'avance du fil (70).

12. Dispositif d'avance du fil selon la revendication 11, **caractérisé en ce que** les moyens d'attache sont disposés au capot (40).

13. Dispositif d'avance du fil selon la revendication 12, **caractérisé en ce que** les moyens d'attache sont disposés à la poignée (50).

14. Dispositif d'avance du fil selon l'une des revendications précédentes, **caractérisé en ce que** le premier appui (11) et le deuxième appui (12) sont adaptés pour appuyer un axe de bobinage de fil (20) ayant un diamètre d'au moins une partie de la première extrémité (21) de l'axe de bobinage de fil (20) et d'au moins une partie de la deuxième extrémité (22) de l'axe de bobinage de fil (20) d'au moins 100 mm, préférablement d'entre 100 et 200 mm.
